# EUROPEAN PATENT APPLICATION

(11) **EP 4 844 585 A1**
(43) Date of publication of application: **25.11.2026**
(21) Application number: 24923561.5
(22) Date of filing: 23.12.2024
(51) Int. Cl.: G06F 11/10

(54) **DATA CHECK METHOD, DEVICE AND SYSTEM**

(30) Priority: 07.02.2024 CN 202410175917
(71) Applicant: Yinwang Intelligent Technologies Co., Ltd., Shenzhen, Guangdong 518110 (CN)
(72) Inventor: WANG, Ruyue, Shenzhen, Guangdong 518129 (CN)
(74) Representative: MERH-IP Matias Erny Reichl Hoffmann Patentanwälte PartG mbB
(86) International application number: PCT/CN2024/141486
(87) International publication number: WO 2025/167359

(57) **Abstract**

This application provides a data check method, apparatus, and system, applied to the field of communications. The method includes: obtaining running environment information, check information, and to-be-checked data; matching a target check manner based on the running environment information and the check information, where the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup; and checking the to-be-checked data based on the target check manner. This application can support a plurality of CRC algorithms, and adaptively provide an optimal check manner based on system information, so as to improve a calculation speed, and optimize data check.

## Description

This application claims priority to Chinese Patent Application No. 202410175917.9, filed with the China National Intellectual Property Administration on February 7, 2024 and entitled "DATA CHECK METHOD, APPARATUS, AND SYSTEM", which is incorporated herein by reference in its entirety.

### TECHNICAL FIELD

This application relates to the field of communications, and in particular, to a data check method, apparatus, and system.

### BACKGROUND

Currently, cyclic redundancy check (cyclic redundancy check, CRC) is usually used for data check, to determine integrity and reliability of data transmission or storage. With rapid development of an information technology and continuous expansion of application scenarios, more types of CRC algorithms are available, and higher performance requirements are imposed on the CRC algorithms. However, a calculation principle of the CRC algorithm is modulo-2 division. As a result, calculation needs to be performed bit by bit during a CRC algorithm operation, and data is calculated in a specific order. To be specific, the calculation needs to be performed in an order from a high-order bit to a low-order bit. Each calculation result also affects the next one, resulting in excessive calculation iterations, high interdependency among data, and a sluggish calculation speed.

Therefore, how to improve a calculation speed and optimize data check becomes a technical problem that urgently needs to be resolved.

### SUMMARY

This application provides a data check method, apparatus, and system, to support a plurality of CRC algorithms, and adaptively provide an optimal check manner based on system information. This improves a calculation speed, and optimizes data check.

To achieve the foregoing objective, this application provides the following technical solutions.

According to a first aspect, this application provides a data check method. The method includes: obtaining running environment information, check information, and to-be-checked data; matching a target check manner based on the running environment information and the check information, where the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup; and checking the to-be-checked data based on the target check manner.

In this application, a plurality of CRC algorithms are supported, and an optimal and most efficient CRC check manner supported by a system in a current scenario is adaptively selected based on a current running environment and a CRC algorithm selected by a user. Efficient calculation is performed based on the CRC check manner, to improve a calculation speed.

According to the first aspect, the running environment information includes a vector instruction set supported by a current running environment and/or hardware CRC information, and the check information includes a to-be-used CRC algorithm parameter.

In some examples, the running environment information is basic information that can be normally run by an application on an operating system and a hardware device. The running environment information includes a vector instruction set supported by a current running environment, hardware CRC information, an operating system, a processor architecture, system configuration information, hardware device information, network environment information, or the like.

In some examples, the hardware CRC information includes hardware CRC interface information supported by the current running environment.

In a possible implementation, the running environment information is dynamically obtained based on an instruction.

In another possible implementation, predefined running environment information is determined.

In some examples, the check information includes a to-be-used CRC algorithm parameter. The CRC algorithm parameter includes a polynomial length, a polynomial definition, an initial value, whether an input is reversed, whether an output is reversed, and a result exclusive OR value.

In a possible implementation, check information is determined in response to a CRC algorithm selected by a user.

According to any one of the first aspect or the foregoing implementations of the first aspect, when the target check manner is the first check manner, checking the to-be-checked data based on the target check manner includes: generating a target vector instruction set based on the vector instruction set supported by the current running environment, where the target vector instruction set is a vector instruction set capable of completing CRC calculation; and checking the to-be-checked data according to the target vector instruction and the check information.

In this application, an operation framework corresponding to vectorized calculation is formed. As long as the vector instruction set supported by the current running environment is used, a corresponding target vector instruction may be obtained based on the operation framework, to perform vectorized CRC calculation of any CRC algorithm. The operation framework may be applicable to different vector instruction sets and different CRC algorithms. In an operation process, the user only needs to provide parameters such as an initial value of a CRC algorithm, whether an output is reversed, and a result exclusive OR value, pre-calculate a feature value based on a polynomial in the check information, and then input the parameters provided by the user into the operation framework, to obtain a calculated result of the CRC algorithm selected by the user, so as to optimize a check manner.

According to any one of the first aspect or the foregoing implementations of the first aspect, the generating the target vector instruction set based on the vector instruction set supported by the current running environment includes: combining the vector instruction set supported by the current running environment, to obtain the target vector instruction set, where the target vector instruction set includes a carry-less multiplication operation instruction and an exclusive OR operation instruction.

In this application, during vectorized operation, the vector instruction set can meet requirements of different CRC algorithms based on the operation framework, and can be efficiently calculated in the current running environment. In addition, the operation framework has strong universality. The operation framework can be applied as long as a platform or a device can support a basic vector instruction set, and therefore, has high applicability.

According to any one of the first aspect or the foregoing implementations of the first aspect, when the vector instruction set supported by the current running environment does not include the carry-less multiplication operation instruction, the combining the vector instruction set supported by the current running environment, to obtain the target vector instruction set includes: performing a combination operation on the vector instruction set supported by the current running environment, to obtain the carry-less multiplication operation instruction; and generating the target vector instruction set according to the carry-less multiplication operation instruction and the exclusive OR operation instruction in the vector instruction set supported by the current running environment.

In this application, an advanced vector operation instruction required for CRC calculation, namely, the carry-less multiplication operation instruction, is obtained through combination based on the basic vector instruction set, to facilitate subsequent vectorized CRC calculation. This improves calculation efficiency and performance, and improves code reusability and portability.

According to any one of the first aspect or the foregoing implementations of the first aspect, when the vector instruction set supported by the current running environment includes the carry-less multiplication operation instruction, but a length that is of data capable of being processed by a vector register and that is indicated by the carry-less multiplication operation instruction is less than a polynomial length in the check information, the checking the to-be-checked data according to the target vector instruction and the check information includes: performing segmentation processing according to the target vector instruction and the check information, and checking the to-be-checked data.

In this application, through segmentation processing, a vector register with a fixed length can process a longer CRC polynomial.

According to any one of the first aspect or the foregoing implementations of the first aspect, the check information includes the polynomial length, the first check manner includes a preset polynomial length, and the method further includes: performing normalization processing on the polynomial length in the check information based on the preset polynomial length, where a processed polynomial length is the same as the preset polynomial length.

In this application, the polynomial after normalization is performed has the same length, and different CRC algorithms can be calculated by using a same operation framework. This improves universality of the operation framework.

According to any one of the first aspect or the foregoing implementations of the first aspect, the check information further includes whether input data is reversed, the first check manner further includes a first preset processing framework and a second preset processing framework, the first preset processing framework is a preset CRC calculation framework used when the input data is reversed, the second preset processing framework is a preset CRC calculation framework used when the input data is not reversed, and the checking the to-be-checked data according to the target vector instruction and the check information includes: if the check information includes that the input data is reversed, checking the to-be-checked data according to the target vector instruction and the first preset processing framework; or if the check information includes that the input data is not reversed, checking the to-be-checked data according to the target vector instruction and the second preset processing framework.

In this application, for a differentiated operation manner, a corresponding processing framework is set, to better adapt to different CRC algorithm requirements, improve calculation efficiency, and ensure universality and consistency of the operation framework.

According to any one of the first aspect or the foregoing implementations of the first aspect, when the target check manner is the second check manner, checking the to-be-checked data based on the target check manner includes: checking the to-be-checked data based on hardware CRC indicated by the hardware CRC information.

In this application, when it is determined that the target check manner is the second check manner, high-speed CRC calculation is performed based on the hardware CRC, so that a calculation capability of hardware can be fully used, and calculation efficiency and performance can be improved.

According to any one of the first aspect or the foregoing implementations of the first aspect, when the target check manner is the third check manner, checking the to-be-checked data based on the target check manner includes: generating a table lookup table based on a preset bit and the check information, and checking the to-be-checked data based on the table lookup table.

In this application, when the target check manner is the third check manner, check is completed by using the table lookup table. The table lookup method is efficient and flexible, and is applicable to calculation requirements of different CRC polynomial lengths.

According to any one of the first aspect or the foregoing implementations of the first aspect, the matching the target check manner based on the running environment information and the check information includes: determining whether the running environment information includes the hardware CRC information; and if it is determined that the running environment information includes the hardware CRC information, and the hardware CRC information corresponds to the to-be-used CRC algorithm parameter, determining that the target check manner is the second check manner.

According to any one of the first aspect or the foregoing implementations of the first aspect, if the running environment information does not include the hardware CRC information; or if the running environment information includes the hardware CRC information but the hardware CRC information does not correspond to the to-be-used CRC algorithm parameter, the matching the target check manner based on the running environment information and the check information includes: determining whether the running environment information includes the vector instruction set; and if it is determined that the running environment information includes the vector instruction set and a data length of the to-be-checked data meets a preset threshold, determining that the target check manner is the first check manner.

In some examples, the preset threshold is a preset minimum data length of data that can be checked in the first check manner.

According to any one of the first aspect or the foregoing implementations of the first aspect, the running environment information does not include the vector instruction set; or the running environment information includes the vector instruction set, but the data length of the to-be-checked data does not meet the preset threshold, and the matching the target check manner based on the running environment information and the check information includes: determining that the target check manner is a third check manner.

In this application, the most efficient check manner that can be currently used is adaptively determined based on various information supported by current environment information and check information selected by a user. This helps improve a calculation speed.

According to any one of the first aspect or the foregoing implementations of the first aspect, the matching the target check manner based on the running environment information and the check information includes: determining the matched target check manner based on the running environment information, the check information, and a preset priority, where the preset priority is a preset selection sequence of different check manners.

In this application, an optimal and most efficient check manner that can be supported in a current scenario is determined based on the running environment information, the check information, and the length of the to-be-checked data, to improve data check efficiency.

According to a second aspect, this application provides a data check system. The data check system includes: an obtaining module, configured to obtain running environment information, check information, and to-be-checked data; a matching module, configured to match a target check manner based on the running environment information and the check information, where the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup; and a check module, configured to check the to-be-checked data based on the target check manner.

According to a third aspect, this application provides a data check apparatus. The apparatus includes a processor and a memory. The memory is coupled to the processor, the memory is configured to store a computer-readable instruction, and when the processor reads the computer-readable instruction from the memory, the data check apparatus is enabled to perform the method according to any one of the first aspect and the implementations of the first aspect.

According to a fourth aspect, a vehicle is provided. The vehicle includes the data check system according to the second aspect or the data check apparatus according to the third aspect.

For example, the vehicle includes a car, a truck, a motorcycle, a bus, a lawn mower, a recreational vehicle, a playground vehicle, a construction device, a tram, a golf cart, a train, or the like. This is not particularly limited in this application. Power of the vehicle may be provided by gasoline, diesel, electric energy, solar energy, hydrogen energy, or the like.

According to a fifth aspect, this application provides a chip system. The chip system includes at least one processor and at least one interface circuit. The at least one interface circuit is configured to perform a transceiver function, and the at least one processor is configured to perform the method according to any one of the first aspect and the implementations of the first aspect.

According to a sixth aspect, this application provides a computer-readable storage medium. The computer-readable storage medium includes a computer program. When the computer program is run on a computer, the computer is enabled to perform the method according to any one of the first aspect and the implementations of the first aspect.

For technical effects corresponding to the second aspect to the sixth aspect and any one of the implementations of the second aspect to the sixth aspect, refer to technical effects corresponding to the first aspect and any one of the implementations of the first aspect. Details are not described herein again.

### BRIEF DESCRIPTION OF DRAWINGS

FIG. 1 is a diagram of an interaction procedure of a communication method according to an embodiment of this application;
FIG. 2 is a diagram of a data check development interface according to an embodiment of this application;
FIG. 3 is a diagram of a system architecture of a data check application scenario according to an embodiment of this application;
FIG. 4 is a diagram 1 of an architecture of a data check system according to an embodiment of this application;
FIG. 5 is a diagram of a hardware structure of a data check apparatus according to an embodiment of this application;
FIG. 6 is a diagram of a structure of a vehicle according to an embodiment of this application;
FIG. 7 is a schematic flowchart of a data check method according to an embodiment of this application;
FIG. 8 is a diagram 1 of a data check scenario according to an embodiment of this application;
FIG. 9 is a diagram 2 of a data check scenario according to an embodiment of this application;
FIG. 10 is a diagram 2 of an architecture of a data check system according to an embodiment of this application; and
FIG. 11 is a diagram of a structure of a chip system according to an embodiment of this application.

### DESCRIPTION OF EMBODIMENTS

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In the descriptions of embodiments of this application, unless otherwise specified, "a plurality of" means two or more. In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

For ease of understanding, the following first describes technical terms in embodiments of this application.

Cyclic redundancy check (cyclic redundancy check, CRC) is a data check method widely used in the fields of communication, storage, and functional safety. A check principle of the CRC is to perform polynomial calculation on data. A transmit end and a receive end pre-agree on a CRC algorithm, and determine a polynomial used for check. The transmit end uses a specific polynomial as a divisor and uses to-be-protected data (also referred to as original data) as a dividend. Modulo-2 division is performed on the divisor and the dividend, and a remainder is appended to an end of the to-be-protected data as CRC check code of the to-be-protected data. The transmit end then sends entire data to the receive end. The receive end uses the polynomial to check received data to ensure data transmission correctness and integrity.

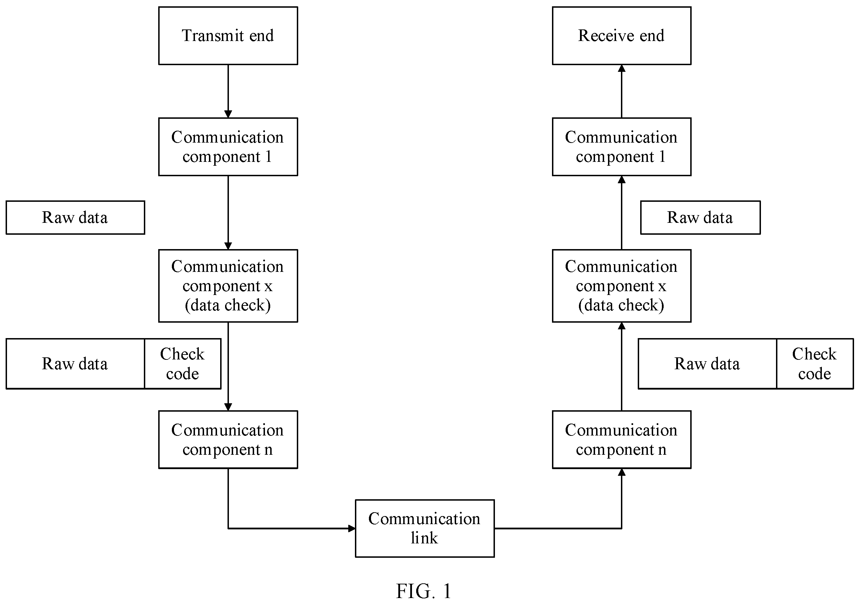

For example, FIG. 1 is an interaction flowchart of applying CRC to a communication scenario. The transmit end processes to-be-sent data layer by layer by using a communication component 1 to a communication component n, and sends processed data to the receive end by using a communication link. Herein, n is a positive integer. The receive end parses received data layer by layer by using the communication component n to the communication component 1, and finally receives data from the transmit end.

For example, the communication component 1 of the transmit end and the communication component 1 of the receive end, a communication component x of the transmit end and a communication component x of the receive end, and the communication component n of the transmit end and the communication component n of the receive end are respectively located at a same communication layer. The transmit end and the receive end determine that the communication component x at the communication layer performs data check. That is, the CRC is used to protect and check data, and the CRC algorithm is determined. The communication component x on the transmit side calculates a CRC check code of original data sent by a previous communication layer (for example, a communication component x-1, which is not shown in FIG. 1) based on a polynomial in a predetermined CRC algorithm, and appends the CRC check code to an end of the original data. Another communication component processes the appended original data and sends processed data to the receive end by using the communication link. The communication component x on the receive end calculates a CRC check code of original data sent by a previous communication layer (for example, a communication component x+1, which is not shown in FIG. 1) based on the polynomial in the predetermined CRC algorithm, and compares a calculated result with the CRC check code in the received data. If the calculated result is consistent with the CRC check code in the received data, it is determined that the original data does not change in a transmission process of the communication component x and a transmission layer below the communication component x, and the data is complete and reliable. If the calculated result is inconsistent with the CRC check code in the received data, it indicates that the original data is damaged or tampered with in the transmission process of the communication component x and the transmission layer below the communication component x, and the data is unreliable.

The CRC algorithm is a check algorithm, and is usually used to detect whether an error occurs during data transmission or storage. The CRC algorithm includes a CRC algorithm parameter. The CRC algorithm parameter includes six parameters: a polynomial length (width), a polynomial definition (poly), an initial value (init), whether an input is reversed (refin), whether an output is reversed (refont), and a result exclusive OR value (xorout). If six parameters in two CRC algorithms are completely the same, it indicates that the two CRC algorithms are the same, and are a same CRC algorithm. If any one of the six parameters in the two CRC algorithms is different, it indicates that the two CRC algorithms are different.

The polynomial length refers to a quantity of bits of a polynomial in the CRC algorithm. For example, in 32-bit cyclic redundancy check (32-bit cyclic redundancy check, CRC-32) (which may also be described as Ethernet CRC32) used in Ethernet (Ethernet), the polynomial length is 32. The polynomial definition refers to a polynomial used in the CRC algorithm. The polynomial is usually fixed. For example, a generator polynomial used in the CRC-32 is x^32 + x^26 + x^23 + x^22 + x^16 + x^12 + x^11 + x^10 + x^8 + x^7 + x^5 + x^4 + x^2 + x + 1. The initial value refers to an initial value that is pre-agreed in the CRC algorithm and that is the same as the polynomial length and that is used to calculate a check code. The initial value is usually a binary number. For example, the initial value in CRC-32 is 0xFFFFFFFF. Before performing modulo-2 division, an exclusive OR operation is first performed on input data and the initial value, and then modulo-2 division is performed on an exclusive OR operation result. Whether the input is reversed indicates whether to check the input data before the CRC check code is calculated. If this parameter is 1, the input data needs to be checked. If this parameter is 0, the input data does not need to be checked. Whether the output is reversed indicates whether to check the calculated result after the CRC check code is calculated. If this parameter is 1, the CRC check code obtained through calculation needs to be checked. If this parameter is 0, the CRC check code obtained through calculation does not need to be checked. The result exclusive OR value is used to calculate a final value of the CRC check code. An exclusive OR operation is performed on the CRC check code obtained through calculation with the result exclusive OR value, to obtain the final CRC check code. The result exclusive OR value is usually a binary number. For example, the result exclusive OR value in CRC-32 is 0xFFFFFFFF.

It can be understood that a different value of any one of parameters in the CRC algorithm parameter may cause a different CRC check code to be generated. Therefore, when the CRC algorithm is used, calculation needs to be performed based on corresponding parameters, to ensure reliability and integrity of data transmission.

CRC check is applicable to any scenario in which data needs to be checked. In addition, with rapid development of information technologies and continuous expansion of scenarios, a same operating system may use different data communication protocols, a same operating system may be applied to different application scenarios, a same operating system may implement different functions, and a same operating system may meet different CRC check requirements. Therefore, in a running process, the same operating system needs to use a plurality of different CRC algorithms to meet different check requirements of upper-layer protocol components and applications in the operating system. To facilitate use of the CRC algorithm by the upper-layer protocol components and the applications in the operating system, the operating system usually provides a CRC library or a CRC module. The CRC library or the CRC module includes a plurality of common CRC algorithms or a specific CRC algorithm used by the upper-layer protocol component and/or the application, to facilitate using of the upper-layer protocol component and the application, and to support any CRC algorithm, so as to complete CRC calculation of any polynomial length, any polynomial definition, and any input/output processing.

For example, in an in-vehicle communication scenario, there are a plurality of types of CRC algorithms. Different communication components, protocol components, and applications in an in-vehicle system may use different CRC algorithms, to provide a basic data reliability check capability and communication function security assurance for the in-vehicle system.

CRC algorithms related to the in-vehicle communication scenario include the following: common CRC algorithms, including but not limited to an industry standard algorithm and an algorithm used by a common communication protocol; and customized CRC algorithms, including but not limited to a CRC algorithm used by customized application software.

For example, the common CRC algorithms include: seven CRC algorithms (CRC-8, CRC-8H2F, CRC-16, CRC-32, CRC-32C, CRC-64, and CRC-64-WEIGHTED) required by an automotive open system architecture (automotive open system architecture, AUTOSAR) for Ethernet communication and a controller area network (controller area network, CAN); three CRC algorithms (CRC-32, CRC-16, and CRC-8) used by a data distribution service (data distribution service, DDS) communication protocol; four CRC algorithms (CRC-6, CRC-10, CRC-16, and CRC-32) required by an international telecommunication union (international telecommunication union, ITU) organization; a CRC algorithm (CRC-16) used by a serial communication protocol (Modbus protocol); a CRC algorithm (CRC-16) used by an electronic product code (electronic product code, EPC) network protocol; a CRC algorithm (CRC-8) used by a robust header compression (robust header compression, RoHC) standard; a CRC algorithm (CRC-16) used by a serial port communication protocol (Xmodem protocol); a CRC algorithm (CRC-16) used by a distributed network protocol (Distributed Network Protocol, DNP); a CRC algorithm (CRC-7) used by a secure digital card (secure digital card) (SD card) or a multimedia card (multimedia card, MMC); a CRC algorithm (CRC-32) used by a moving picture experts group (moving picture experts group, MPEG) protocol; and two CRC algorithms (CRC-5 and CRC-16) used by a universal serial bus (universal serial bus, USB) protocol.

For another example, the customized CRC algorithms include a special CRC algorithm (for example, CRC-8/MAXIM and CRC-16/MAXIM of a Maxim chip) that needs to be used when a special third-party chip is connected, an unconventional CRC length, a customized CRC polynomial, or a CRC algorithm (for example, CRC-16/CCITT and CRC-16/CCITT-FALSE) that has a difference from calculation input and output processing of general protocol CRC.

It should be understood that the CRC algorithm uses a calculation manner of "modular-2 division", and performs a division operation on to-be-protected data bit by bit (which may also be understood as bit (bit)) to determine a remainder, and only one bit of data is eliminated each time. When CRC data check is used for data with a long data length, a large amount of calculation is required. In addition, the division operation has a natural operation sequence dependency problem, and needs to be performed sequentially from a high-order bit to a low-order bit. Calculation of each bit in the CRC algorithm depends on a calculated result of a previous bit, and parallel optimization cannot be performed on the division calculation. As a result, a calculation speed is low during CRC data check.

In some examples, a table lookup method is used to optimize a calculation speed during CRC check. Specifically, all possible "modular-2 division" calculated results of a dividend of a predetermined length (for example, 8 bits) are pre-calculated and stored in a table that can be directly queried, so that the calculated result can be directly obtained by querying the table in a calculation process, to eliminate data with a preset length at a time and reduce a quantity of calculation times. CRC calculation of an optimized table lookup method may further improve calculation efficiency. For example, an extended table lookup method is to cover a larger range of dividends by adding more pre-calculated results, thereby reducing a quantity of query times and improving a calculation speed. Segment data parallel table lookup is to divide data into a plurality of segments, and perform table lookup calculation on each segment, to eliminate data in parallel while improving a processing speed.

However, an essence of the foregoing table lookup method is to exchange space for time. Elimination of 1-bit data at a time is optimized to elimination of a plurality of bits of data at a time by storing a table, but a dependency problem of the division operation is not resolved. In addition, the table occupies extra space, and therefore, system overheads are high, a latency is long, and system performance is affected.

In some other examples, a calculation speed is optimized when hardware CRC is used to perform CRC check. Specifically, hardware CRC calculation is a technology in which CRC calculation of a specific CRC algorithm model is completed by using a CRC calculation interface provided by a chip. That is, CRC calculation is directly performed by using a dedicated hardware module or an instruction set on the chip. Generally, input data of the hardware CRC interface is mostly basic data types, such as an integer type and a character type, and a length of the input data does not exceed 64 bits (bits) (that is, 8 bytes (bytes)). If the length of the input data exceeds a length corresponding to the basic data type, the input data is split, and the hardware CRC interface is called for a plurality of times to calculate a final calculated result of the input data.

Compared with that in the table lookup method, the foregoing hardware CRC calculation has a higher calculation speed. However, a quantity of CRC algorithms that can be executed by hardware CRC is small, and one chip usually has only one or two CRC algorithms. For example, hardware CRC provided by a chip of a mobile hardware platform (advanced RISC machine, ARM) (which may also be described as an ARM architecture or an ARM platform) is CRC-32C/Castagnoli and CRC-32/IEEE-802.3. The hardware CRC provides support capabilities only for the CRC algorithms supported by the hardware CRC. Hardware CRC algorithms provided by different chips are different. When software is written on different hardware CRC platforms, performance and support of different hardware platforms need to be considered. A calculation capability of the hardware CRC is invoked by using a specific instruction or interface. This results in poor portability of the hardware CRC. In addition, when using the hardware CRC, the software strongly depends on hardware resources of the chip. This affects system performance.

To resolve the foregoing technical problem, an embodiment of this application provides a data check method. The method includes: obtaining running environment information, check information, and to-be-checked data; matching a target check manner based on the running environment information and the check information, where the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup; and checking the to-be-checked data based on the target check manner. The method provided in this embodiment of this application supports a plurality of CRC algorithms, and adaptively provides an optimal check manner based on system information, so as to improve a calculation speed, and optimize data check.

The following describes the technical solutions in embodiments of this application with reference to the accompanying drawings in embodiments of this application. It is clear that the described embodiments are merely a part rather than all of embodiments of this application.

The data check method provided in this embodiment of this application may be applied to a product running phase and a product development phase. The data check method provided in this embodiment of this application may be applied to application scenarios that require data check, such as a data communication scenario, a data storage scenario, a file check scenario, a network protocol check scenario, a functional safety test scenario, and data encryption. An application phase and an application scenario of data check are not specially limited in embodiments of this application.

Specifically, in the product development phase, the data check method provided in embodiments of this application may be applied to a development process of CRC-related products of communication, storage, functional safety, and the like, so that a developer integrates CRC calculation programs applicable to a specific application scenario into the product, tests and checks the CRC calculation programs, and finally integrates the CRC calculation programs into the product.

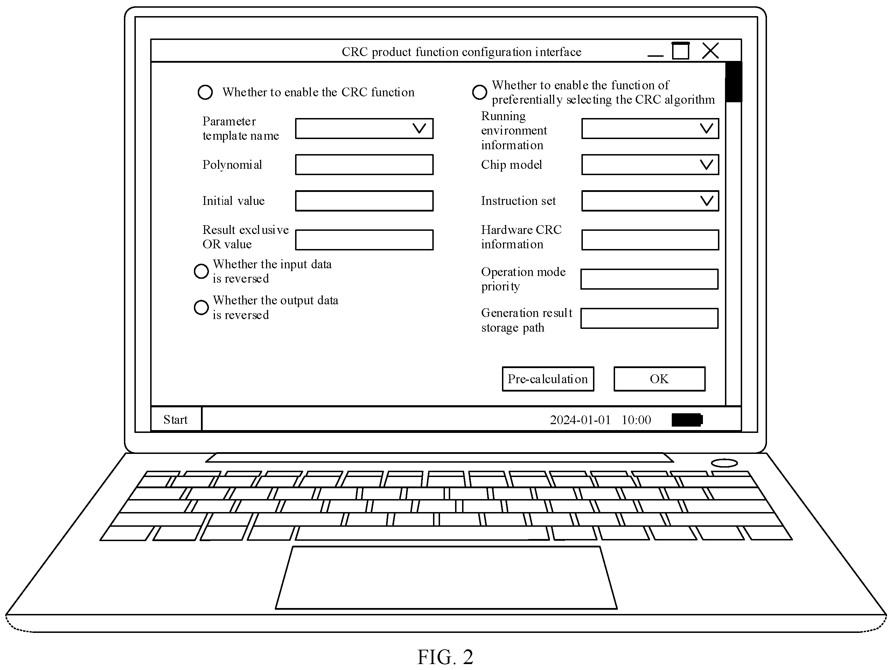

For example, as shown in FIG. 2, FIG. 2 is a CRC product function configuration interface in the development phase. The configuration interface includes options of different functions related to a CRC function. The developer may combine functions of the CRC product as required based on the options provided in the configuration interface, and generate a corresponding CRC calculation program based on the combined functions. For example, if choosing to enable the CRC function, the developer may further enter information about a CRC algorithm parameter model (for example, a parameter model name, a polynomial, an initial value, a result exclusive OR value, whether input data is reversed, and whether output data is reversed), to generate a CRC calculation program corresponding to a CRC algorithm. Alternatively, if choosing to enable a CRC algorithm selection function, the developer may further enter information related to the CRC algorithm selection function (for example, running environment information, a chip model, an instruction set, and hardware CRC information), to generate a hardware CRC calculation program or a software vector CRC calculation program. The configuration interface may further include an operation manner priority. Pre-calculation is performed based on a specified priority, and a pre-calculated result is stored based on a generation result storage path, so that the product directly invokes the pre-calculated result based on the generation result storage path.

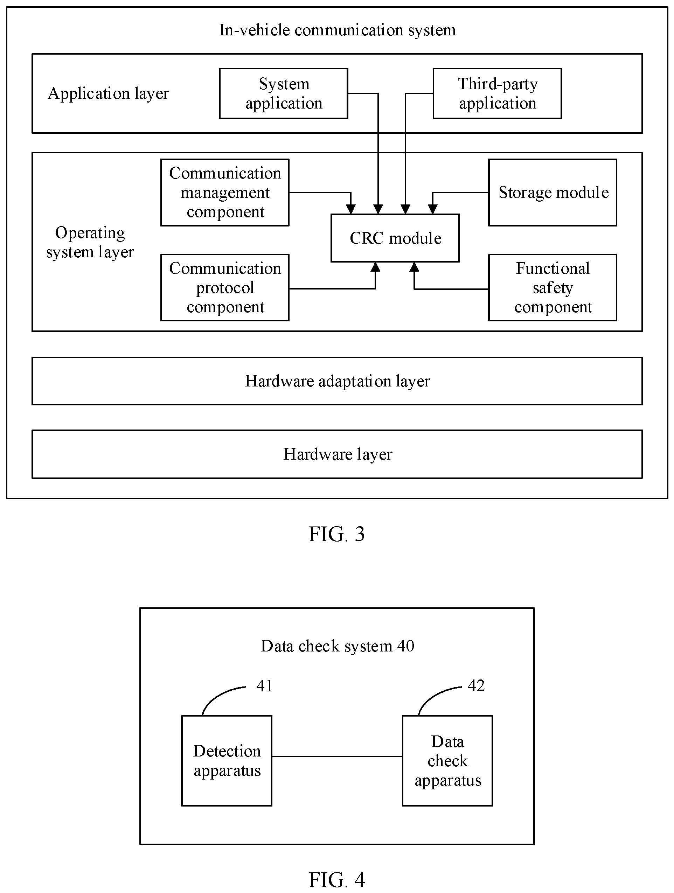

Specifically, in the product running phase, the data check method provided in embodiments of this application may be applied to a running procedure of a CRC-related product of communication, storage, functional safety, and the like, so that the product provides a CRC check function for another application, a protocol component, and the like in a system. For example, an in-vehicle communication scenario is used as an example. FIG. 3 is a system architecture diagram of an in-vehicle communication system. The in-vehicle communication system includes an application layer, an operating system layer, a hardware abstraction layer (hardware abstraction layer, HAL), and a hardware layer. The application layer includes a system application (application, app) that is built in the system and/or a third-party application (which may also be described as an application). The operating system layer includes a CRC module, a communication management component, a communication protocol component, a storage module, and a functional safety component.

The system application may also be referred to as an embedded application. The embedded application is an application that is used as a part of a function implemented by the terminal device. The third-party application may also be referred to as a downloadable application. The downloadable application is an application that may provide an internet protocol multimedia subsystem (internet protocol multimedia subsystem, IMS) connection of the downloadable application. The downloadable application may be an application pre-installed on the terminal device, or may be a third-party application downloaded and installed by a user on the terminal device. The system application and the third-party application may also be described as an application. The application is configured to implement a specific function or provide a specific service.

The CRC module is configured to provide a CRC check function for each component and each application. The communication management component is responsible for managing communication between processes and threads. The communication protocol component is responsible for managing and implementing network communication between computers. The storage module is responsible for managing data storage of internal and external storage devices of the system. The functional safety component is responsible for detecting a possible fault in the system, processing an error, and ensuring reliable running of the system.

When components at the application layer and the operating system layer in the in-vehicle communication system run, the components use a CRC calculation capability and a CRC check capability of the CRC module by calling a function or by using an interface, to implement corresponding functions. For example, the communication management component calls the CRC module to check whether data transmitted in communication is correct. The storage module calls the CRC module to check whether stored data is damaged.

The data check method in embodiments of this application may be applied to various devices and/or various systems that use the CRC function. There are various types of devices. The devices may include various transportation means such as a new energy vehicle, an electric vehicle, a bus, and a vehicle; and may also include various electronic devices such as a mobile phone, a tablet computer, a personal computer (personal computer, PC), and a wearable device. The system may include a communication system, a storage system, a control system, an embedded system, a smart home system, an edge computing system, a cloud service system, an autonomous driving system, an internet of things system, and the like. Specific forms of the device and the system are not specially limited in embodiments of this application.

For example, FIG. 4 is a diagram of an architecture of a data check system 40 according to an embodiment of this application. As shown in FIG. 4, the data check system 40 includes a detection apparatus 41 and a data check apparatus 42. The detection apparatus 41 and the data check apparatus 42 are connected and communicate with each other. The detection apparatus 41 and the data check apparatus 42 are integrated on a same chip.

In this embodiment of this application, the detection apparatus 41 is configured to detect running environment information, check information, and to-be-checked data, and send detected information to the data check apparatus 42, so that the data check apparatus 42 performs data check.

In this embodiment of this application, the data check apparatus 42 is configured to perform the data check method provided in this application. Specifically, the data check apparatus 42 obtains the running environment information, the check information, and the to-be-checked data from the detection apparatus 41; matches a target check manner based on the running environment information and the check information, where the target check manner is one of a first check manner, a second check manner, and a third check manner; in the first check manner, a cyclic redundancy check CRC calculation is completed based on vectorized calculation, in the second check manner, CRC calculation is completed based on hardware CRC, and in the third check manner, CRC calculation is completed based on table lookup; and checks the to-be-checked data based on the target check manner.

The following describes the technical solutions in embodiments of this application by using an in-vehicle communication scenario as an example.

Optionally, the data check apparatus 42 may be an intelligent driving calculation platform. The intelligent driving calculation platform is a calculation platform that implements functions such as intelligent driving, decision-making, planning, and control, and is a core component of an entire vehicle. The intelligent driving calculation platform interacts with components in the vehicle, obtains real-time data of the components, and controls the components to work. This is not limited in embodiments of this application.

Optionally, the data check apparatus 42 may be a server. The server may be a Linux server, a Windows server, or another server device that can provide simultaneous access for a plurality of devices, or may be a server cluster including a plurality of regions, a plurality of equipment rooms, and a plurality of servers. For example, the data check apparatus 42 may be a server in an intelligent transportation system, for example, a physical service or a cloud server. This is not limited in embodiments of this application.

It may be understood that the data check apparatus 42 is configured to check local data. For example, the intelligent driving calculation platform is configured to check data used for communication or storage on the calculation platform. Alternatively, the server is configured to check data used for communication or storage in the server.

It should be understood that the foregoing description of the data check system 40 is merely an example for description. A specific form and an implementation of the data check system 40 are not specifically limited in embodiments of this application.

It may be understood that the modules in the foregoing data check system are divided based on functional logic, and there may be another division manner in practice. In addition, the foregoing modules may have other names. In addition, each module may be implemented by hardware, or may be implemented by software, or may be implemented by a combination of hardware and software. Specifically, that a module is implemented by hardware, software, or a combination of software and hardware depends on specific applications and design constraints of the technical solutions. Different modules may be implemented by different hardware, or a plurality of modules may be implemented by same hardware. This is not specifically limited in embodiments of this application.

It may be understood that the system architecture and the service scenario described in this application are intended to describe the technical solutions in this application more clearly, and do not constitute a unique limitation on the technical solutions provided in this application. A person of ordinary skill in the art may learn that, with evolution of the system architecture and emergence of new service scenarios, the technical solutions provided in this application are also applicable to similar technical problems.

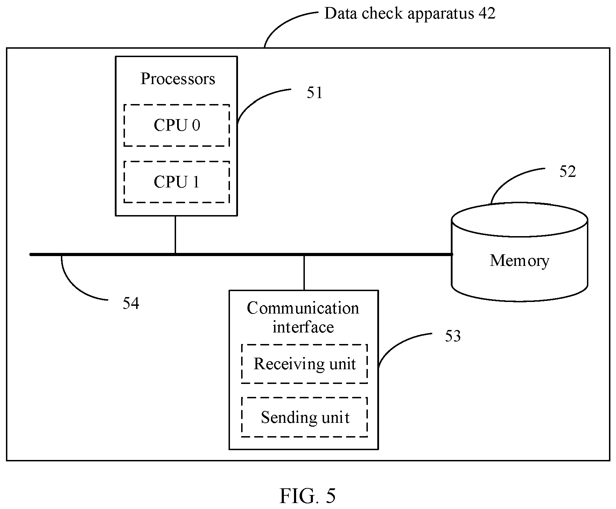

FIG. 5 shows a hardware structure of a data check apparatus 42 according to an embodiment of this application.

As shown in FIG. 5, the data check apparatus 42 includes a processor 51, a memory 52, a communication interface 53, and a bus 54. The processor 51, the memory 52, and the communication interface 53 may be connected through the bus 54.

The processor 51 is configured to manage and control the data check apparatus 42, and/or configured to perform the data check method described below. The memory 52 is configured to store program code and data of the data check apparatus 42. The communication interface 53 is configured to support communication between the data check apparatus 42 and another network entity.

The processor 51 (or described as a controller) is a control center of the data check apparatus 42, and may implement or execute various example logical blocks, unit modules, and circuits described with reference to content disclosed in this application. The processor or the controller may be a general-purpose central processing unit (central processing unit, CPU), a general-purpose processor, a digital signal processor (digital signal processor, DSP), an application-specific integrated circuit (application-specific integrated circuit, ASIC), a field programmable gate array or another programmable logic device, a transistor logic device, a hardware component, or any combination thereof. The general-purpose processor may be a microprocessor, any conventional processor, or the like. Alternatively, the processor 51 may be a combination implementing a calculation function, for example, a combination of one or more microprocessors, or a combination of the digital signal processor and a microprocessor.

In an example, the processor 51 may include one or more CPUs, for example, a CPU 0 and a CPU 1 that are shown in FIG. 5.

The memory 52 may be a read-only memory (read-only memory, ROM), another type of static storage device that can store static information and instructions, a random access memory (random access memory, RAM), or another type of dynamic storage device that can store information and instructions, or may be a flash memory, a hard disk, or a solid state disk, or may be an electrically erasable programmable read-only memory (electrically erasable programmable read-only memory, EEPROM), a magnetic disk storage medium, or another magnetic storage device, or any other medium that can be used to carry or store expected program code in a form of an instruction structure or a data structure and that is accessible to a computer. However, this is not limited thereto. The memory 52 may further include a combination of the foregoing types of memories. In a possible implementation, the memory 52 may be independent of the processor 51. The memory 52 may be connected to the processor 51 through the bus 54, and is configured to store data, instructions, or program code. When invoking and executing the instructions or program code stored in the memory 52, the processor 51 can implement the data check method provided in embodiments of this application.

In another possible implementation, the memory 52 may alternatively be integrated with the processor 51.

The communication interface 53 is configured to connect the data check apparatus 42 to another device through a communication network. The communication network may be a transceiver circuit, an Ethernet, a radio access network (radio access network, RAN), a wireless local area network (wireless local area network, WLAN), or the like. The communication interface 53 may include a receiving unit configured to receive data and a sending unit configured to send data.

The bus 54 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 5, but this does not mean that there is only one bus or only one type of bus.

It should be noted that the structure shown in FIG. 5 does not constitute a limitation on the data check apparatus 42. In addition to the components shown in FIG. 5, the data check apparatus 42 may include more or fewer components than the components shown in the figure, or combine some components, or have different component arrangements.

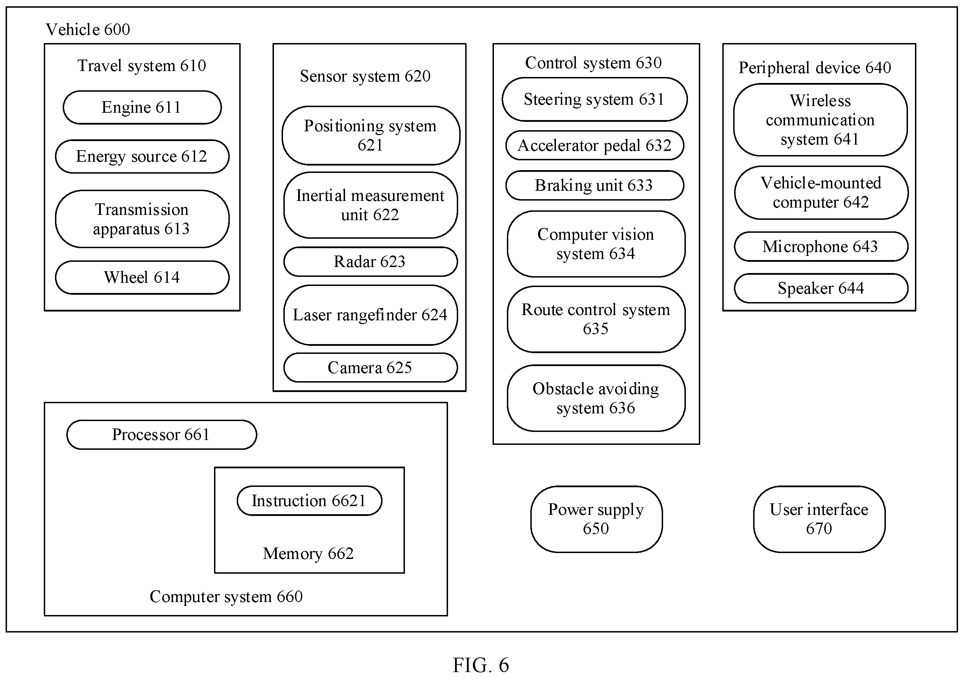

FIG. 6 is a diagram of a structure of a vehicle 600 according to an embodiment of this application. Refer to FIG. 6. The vehicle 600 may include various subsystems, such as a travel system 610, a sensor system 620, a control system 630, one or more peripheral devices 640, and a power supply 650, a computer system 660, and a user interface 670. Optionally, the vehicle 600 may include more or fewer subsystems, and each subsystem may include a plurality of elements. In addition, each subsystem and component of the vehicle 600 may be interconnected in a wired or wireless manner.

The travel system 610 may include a component that provides power for motion of the vehicle 600. The engine 611 may be a motor or a combination of other types of engines. The engine 611 converts the energy source 612 into mechanical energy. Examples of the energy source 612 include solar panels, batteries, and other power sources. The transmission apparatus 613 may transmit mechanical power from the engine 611 to the wheels 614.

The sensor system 620 may include several sensors that sense information about an ambient environment of a vehicle 600. For example, the sensor system 620 may include a positioning system 621, for example, a global positioning system (global positioning system, GPS), a BeiDou system, or another positioning system, an inertial measurement unit (inertial measurement unit, IMU) 622, a radar 623, a laser rangefinder 624, and a camera 625.

The control system 630 controls operations of the vehicle 600 and components of the vehicle 600. The control system 630 may include a plurality of elements, including a steering system 631, an accelerator pedal 632, a braking unit 633, a computer vision system 634, a route control system 635, and an obstacle avoiding system 636, where the obstacle avoiding system 636 may also be referred to as an obstacle avoiding system.

The vehicle 600 interacts with an external sensor, another vehicle, another computer system, or a user through the peripheral device 640. The peripheral device 640 may include a wireless communication system 641, a vehicle-mounted computer 642, a microphone 643, and/or a speaker 644.

The power supply 650 may provide power for various components of the vehicle 600.

Some or all of functions of the vehicle 600 are controlled by the computer system 660. The computer system 660 may include at least one processor 661, and the processor 661 executes instructions 6621 stored in a non-transitory computer-readable medium, for example, a memory 662. The computer system 660 may alternatively be a plurality of calculation devices that control individual components or subsystems of the vehicle 600 in a distributed manner.

The processor 661 may be any conventional processor, for example, a commercially available central processing unit (central processing unit, CPU). Optionally, the processor may be a dedicated device, for example, an application-specific integrated circuit (application-specific integrated circuit, ASIC) or another hardware-based processor.

In some embodiments, the memory 662 may include the instructions 6621 (for example, program logic), and the instructions 6621 may be executed by the processor 661 to perform various functions of the vehicle 600. The memory 662 may further include additional instructions, including instructions for sending data to, receiving data from, interacting with, and/or controlling one or more of the travel system 610, the sensor system 620, the control system 630, and the peripheral device 640.

In addition to the instructions 6621, the memory 662 may further store data, for example, a road map, route information, a location, a direction, a speed, and other vehicle data of a vehicle, and other information. Such information may be used by the vehicle 600 and the computer system 660 when the vehicle 600 operates in an autonomous mode, a semi-autonomous mode, and/or a manual mode.

For example, the computer vision system 634 processes a visual signal to determine that there is a pedestrian in front of the vehicle, and the computer vision system 634 encrypts visual data (for example, there is a pedestrian in front) indicated by the visual signal by using CRC check, and transmits the encrypted visual data to the processor 661. The processor 661 receives the data through CRC decryption to obtain the visual data, and determines, based on the visual data, that the vehicle needs to brake. The processor 661 encrypts braking data by using the CRC, and sends the encrypted braking data to the braking unit 633. The braking unit 633 receives the data through CRC decryption to obtain the braking data, and brakes to avoid the pedestrian.

The user interface 670 is configured to provide information for or receive information from the user of the vehicle 600.

The computer system 660 may control a function of the vehicle 600 based on input received from various subsystems (for example, the travel system 610, the sensor system 620, and the control system 630) and from the user interface 670.

In some embodiments, the vehicle 600 may further include a vehicle control unit (not shown in FIG. 6). The vehicle control unit may also be described as a powertrain controller or an intelligent driving calculation platform, and is a core control component of the entire vehicle. After collecting input information of each system and component, and performing corresponding determining based on the input information, the vehicle control unit controls actions of each component in the vehicle 600, and drives the vehicle 600 to travel.

Specifically, as a command and management center of the vehicle 600, the vehicle control unit has main functions including driving torque control, optimized control of braking energy, vehicle energy management, maintenance and management of a controller area network (controller area network, CAN) network, fault diagnosis and processing, vehicle status monitoring, and the like. The vehicle control unit plays a role of controlling running of the vehicle. Therefore, quality of the vehicle control unit directly determines stability and safety of the vehicle.

Optionally, one or more of the foregoing components may be separately installed from or associated with the vehicle 600. For example, the memory 662 may be partially or completely separated from the vehicle 600. The foregoing components may be communicatively coupled together in a wired and/or wireless manner.

Optionally, the foregoing components are merely examples. In actual application, components in the foregoing modules may be added or deleted based on an actual requirement. FIG. 6 should not be understood as a limitation on this embodiment of this application.

The vehicle 600 may be a new energy vehicle, an electric vehicle, a car, a truck, a motorcycle, a bus, a boat, an airplane, a helicopter, a lawn mower, a recreational vehicle, a playground vehicle, a construction device, a tram, a golf cart, a train, or the like. This is not specifically limited in embodiments of this application. Power of the vehicle may be provided by gasoline, diesel, electric energy, solar energy, hydrogen energy, or the like.

In some other embodiments of this application, the vehicle may further include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes the method provided in embodiments of this application with reference to the accompanying drawings.

To optimize data check, support a plurality of CRC algorithms, adaptively provide an optimal check manner based on system information, and improve a calculation speed, this application provides a data check method. The method may be performed by a vehicle or another device other than the vehicle, for example, an electronic device, for example, a mobile phone or a computer; or a processor on a vehicle or another device other than the vehicle, for example, the processor 51 or the processor 661 mentioned in the foregoing content.

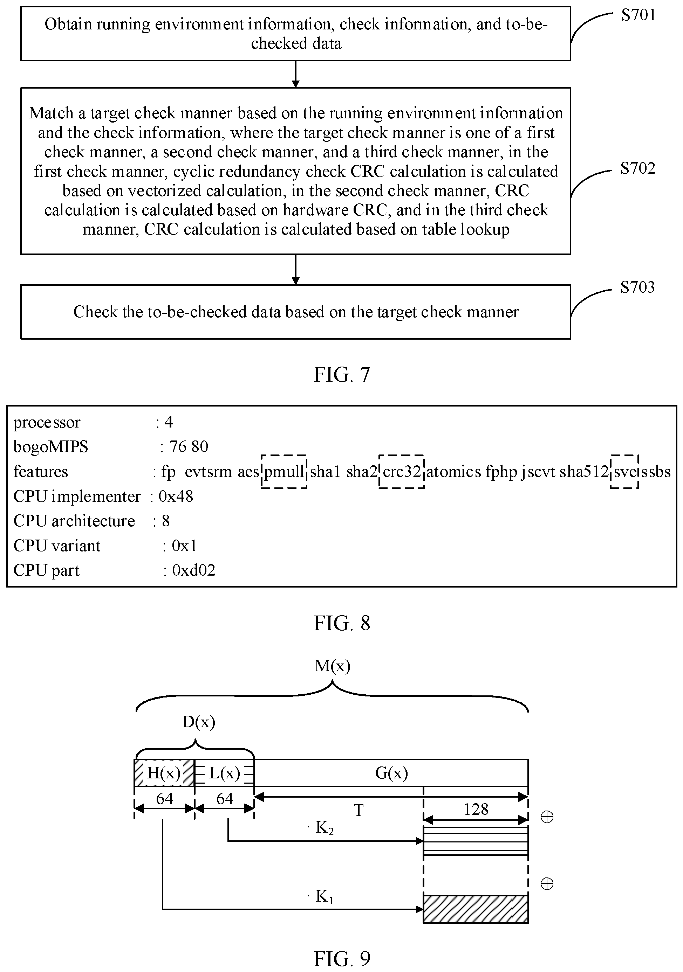

In this embodiment of this application, an in-vehicle communication scenario is used as an example for description. Refer to FIG. 7. FIG. 7 is a schematic flowchart of a data check method according to an embodiment of this application. The data check method includes the following S701 to S703.

S701: A vehicle control unit obtains running environment information, check information, and to-be-checked data.

In this embodiment of this application, the vehicle control unit may alternatively be an intelligent driving calculation platform. The vehicle control unit is a core control component of a vehicle. For example, the vehicle control unit checks data in scenarios such as communication and storage in the vehicle, to ensure data security in the vehicle.

In this embodiment of this application, the vehicle control unit may alternatively be a controller of a component/system in the vehicle, for example, a controller in the computer vision system 634 in FIG. 6.

In this embodiment of this application, the running environment information includes a vector instruction set supported by a current running environment and/or hardware CRC information.

In this embodiment of this application, the running environment information is basic information that an application can run normally on an operating system and a hardware device. The running environment information includes a vector instruction set supported by a current running environment, hardware CRC information, an operating system, a processor architecture, system configuration information, hardware device information, network environment information, or the like. The running environment information may also be understood as CPU-related information.

In some examples, the vector instruction set supported by the current running environment includes a single instruction multiple data (single instruction multiple data, SIMD) vector acceleration instruction set supported by the current running environment, for example, an advanced single-instruction multiple-data stream (Advanced SIMD, NEON) instruction set or a scalable vector extension (scalable vector extension, SVE) instruction set in an ARM architecture, or a streaming single-instruction multiple-data stream extensions (streaming SIMD extensions, SSE) instruction set or an advanced vector extensions (advanced vector extensions, AVX) instruction set in an Intel architecture.

It may be understood that the vehicle control unit in this application obtains the vector instruction set that can be executed in the vehicle, so that when it is determined, subsequently, that the check method is to complete the CRC calculation based on the vectorized calculation, the vectorized CRC calculation may be completed based on the vector instruction set.

In some examples, the hardware CRC information includes hardware CRC interface information supported by the current running environment, for example, a hardware CRC32 interface or a hardware CRC32C interface.

It may be understood that the vehicle control unit in this application obtains the hardware CRC information that can be used in the vehicle, so that when it is determined, subsequently, that the check method is to complete the CRC calculation based on the hardware CRC, data check may be completed based on the hardware CRC indicated by the hardware CRC information.

In a possible implementation, the vehicle control unit obtains the running environment information from each subsystem of the vehicle.

In some examples, after the vehicle is started, the vehicle control unit dynamically obtains the running environment information based on an instruction.

For example, if an operating system is a Linux system, the vehicle control unit may obtain the running environment information by using a "getauxval AT_HWCAP" instruction provided by the system. Alternatively, the vehicle control unit may view the running environment information by using a "cat /proc/cpuinfo" instruction. When the operating system is another operating system, the vehicle control unit may alternatively query the running environment information by using a "sysctl" instruction.

As shown in FIG. 8, FIG. 8 shows running environment information that is of a system and that is dynamically obtained by the Linux system based on an instruction. It may be determined that vector instruction sets supported in the Linux system include a "pmull" vector instruction set used to perform an integer vector multiplication operation and a "sve" vector instruction set that simultaneously processes a plurality of pieces of data in a single instruction. A hardware CRC interface supported in the Linux system is CRC32.

It may be understood that the system actively obtains information and dynamically reads the running environment information, and therefore, the system has higher portability and scalability. In addition, accurate information of the current system can be obtained, so that an optimal check manner is subsequently determined based on the running environment information, to accelerate a data check speed.

In another possible implementation, the vehicle control unit determines predefined running environment information.

In some examples, each module that uses a CRC check function predefines the running environment information, so that the vehicle control unit obtains the predefined running environment information corresponding to the module that uses the CRC check function.

It may be understood that the predefined running environment information avoids time loss caused by dynamic reading, and calculation resources in the vehicle can be customized, flexibly controlled, and allocated. However, the running environment information is an inherent parameter of the system, and specific hardware information of the system needs to be known in advance and actively input into the vehicle. This is troublesome, and portability of the system is poor.

It may be understood that the vehicle control unit obtains the running environment information, so that whether hardware CRC can be used, whether vectorized calculation can be used, or whether table lookup calculation can be used is subsequently determined based on the running environment information, to determine the target check manner.

In this embodiment of this application, the check information includes a to-be-used CRC algorithm parameter. The CRC algorithm parameter includes six parameters: a polynomial length, a polynomial definition, an initial value, whether an input is reversed, whether an output is reversed, and a result exclusive OR value.

In a possible implementation, the vehicle control unit determines the check information in response to a CRC algorithm selected by a user.

In some examples, the vehicle control unit determines, in response to a user operation, a CRC algorithm and check information that are to be used for data check.

It may be understood that the running environment information is inherent in a current system, and a corresponding CRC algorithm is implemented based on current running environment information of a system. It may be understood that a CRC algorithm that can be currently implemented by the system may be determined based on the running environment information. The check information is a CRC algorithm that the user wants to use during data check. Whether the CRC algorithm provided based on the running environment information can be used is determined based on the check information. For example, whether a CRC algorithm corresponding to the check information is a CRC algorithm supported by the hardware CRC information in the running environment information is determined. If the CRC algorithm corresponding to the check information is the CRC algorithm supported by the hardware CRC information in the running environment information, it indicates that the hardware CRC can be used. If the CRC algorithm corresponding to the check information is not the CRC algorithm supported by the hardware CRC information in the running environment information, the hardware CRC cannot be used. Whether the CRC algorithm corresponding to the check information can be implemented based on the vector instruction set in the current running environment is determined.

S702: The vehicle control unit matches a target check manner based on the running environment information and the check information, where the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup.

In this embodiment of this application, a manner in which the vehicle control unit matches the target check manner based on the running environment information and the check information includes: The vehicle control unit determines whether the running environment information includes the hardware CRC information; and if the vehicle control unit determines that the running environment information includes the hardware CRC information, and the hardware CRC information corresponds to the to-be-used CRC algorithm parameter, the vehicle control unit determines that the target check manner is the second check manner.

In some examples, the vehicle control unit first determines whether the second check manner can be used. Specifically, the vehicle control unit first determines whether the running environment information includes the hardware CRC information. If the running environment information includes the hardware CRC information, the vehicle control unit determines, based on the to-be-used CRC algorithm parameter, whether the hardware CRC can be used. If the to-be-used CRC algorithm parameter corresponds to one piece of hardware CRC information in the running environment information, it indicates that a CRC algorithm supported by the piece of hardware CRC information in the current system is a CRC algorithm expected to be used by the user, and the hardware CRC is directly used to complete data check.

It should be understood that a case in which the second check manner is not used includes: The running environment information does not include the hardware CRC information. It indicates that the current system does not include a hardware CRC interface, does not provide a hardware CRC calculation function, and the second check manner cannot be used. Alternatively, the running environment includes the hardware CRC information, but the hardware CRC information is different from the to-be-used CRC algorithm parameter selected by the user. It indicates that the current system provides a hardware CRC interface, but a CRC algorithm that can be implemented by the provided hardware CRC interface is not the CRC algorithm expected to be used by the user, and the hardware CRC interface provided by the system cannot be used, and the second check manner cannot be used.

It may be understood that compared with that in vectorized calculation and table lookup calculation, calculation of the hardware CRC is fastest. Therefore, when it is determined that the CRC calculation can be completed by using the hardware CRC, the second check manner is directly determined as the target check manner.

In this embodiment of this application, based on the foregoing related example in which the vehicle control unit determines the hardware CRC information, if the vehicle control unit determines that the running environment information does not include the hardware CRC information, or if the vehicle control unit determines that the running environment information includes the hardware CRC information but the hardware CRC information does not correspond to the to-be-used CRC algorithm parameter, a manner in which the vehicle control unit matches the target check manner based on the running environment information and the check information further includes: The vehicle control unit determines whether the running environment information includes the vector instruction set; and if the vehicle control unit determines that the running environment information includes the vector instruction set, and a data length of the to-be-checked data meets a preset threshold, determines that the target check manner is the first check manner.

It may be understood that the first check manner may also be described as software vector CRC calculation. The first check manner does not depend on the hardware CRC instruction, and fully utilizes a parallel calculation capability of a system platform (a software platform) chip (for example, a CPU), to implement vectorized CRC calculation based on the vector instruction set.

In this embodiment of this application, based on the foregoing related example in which the vehicle control unit determines whether the second check manner and the first check manner can be used, if the vehicle control unit determines that the running environment information does not include the hardware CRC information; or if the vehicle control unit determines that the running environment information includes the hardware CRC information but the hardware CRC information does not correspond to the to-be-used CRC algorithm parameter, and on this basis, the running environment information further does not include the vector instruction set, or if the running environment information includes the vector instruction set, but the data length of the to-be-checked data does not meet the preset threshold, a manner in which the vehicle control unit matches the target check manner based on the running environment information and the check information further includes: determining that the target check manner is the third check manner.

In this embodiment of this application, the preset threshold is a preset minimum data length of data that can be checked in the first check manner.

It may be understood that the preset threshold is used as a boundary. If the data length of the to-be-checked data is not less than the preset threshold, the first check manner may be used. If the data length of the to-be-checked data is less than the preset threshold, the first check manner is not used, and the third check manner is used.

In some examples, after determining not to use the second check manner, the vehicle control unit determines whether the first check manner can be used. Specifically, the vehicle control unit determines whether the running environment includes the vector instruction set. If the running environment information includes the vector instruction set, the vehicle control unit determines whether the data length of the to-be-checked data is less than the preset threshold. If the data length of the to-be-checked data is not less than the preset threshold, it indicates that data check of the to-be-checked data can be completed through vectorized calculation, and the first check manner is used. If the data length of the to-be-checked data is less than the preset threshold, it indicates that data check of the to-be-checked data can be completed through table lookup calculation, and the third check manner is used.

It should be understood that after it is determined that the second check manner is not used, an appropriate check manner is selected based on the data length of the to-be-checked data. When the to-be-checked data is long, a calculation speed in which the CRC calculation is completed through vectorization is better than that of table lookup calculation. When the to-be-checked data is short, an effect of table lookup calculation is better than that of vectorized calculation.

In this embodiment of this application, priorities of vector instruction sets are preset. If determining that the target check manner is the first check manner, the vehicle control unit selects a vector instruction set with a highest priority from vector instruction sets supported by a current running environment, to perform vectorized calculation.

It may be understood that the vector instruction set includes a plurality of vector operation instruction sets. A priority of each vector operation instruction set is determined based on an operation speed, maturity, and adaptation to a vectorized calculation principle of each vector operation instruction set.

For example, a priority sequence of the vector operation instruction sets is as follows: an instruction set for executing a carry-less multiplication (carry-less multiplication) algorithm in Intel (which may also be described as INTEL-CLMUL) = an extended instruction set of an ARM architecture (ARM-SVE2) > an instruction set for executing a parallel carry-less multiplication with quadwords (parallel carry-less multiplication with quadwords) in Intel (which may also be described as INTEL-PCLMULQDQ) = ARM-NEON > ARM-SVE > another SIMD instruction set.

In this application, an optimal and most efficient check manner that can be supported in a current scenario is determined based on the running environment information, the check information, and the length of the to-be-checked data, to improve data check efficiency.

In this embodiment of this application, specific implementation of matching the target check manner by the vehicle control unit based on the running environment information and the check information further includes: determining, by the vehicle control unit, the matched target check manner based on the running environment information, the check information, and a preset priority, where the preset priority is a preset sequence of different check manners.

In some examples, the preset priority may be a selection sequence that is of different check manners and that is determined by the system based on various types of information. The preset priority may alternatively be a selection sequence that is of different check manners and that is determined based on a user preference.

For example, the preset priority set by the user is the first check manner > the second check manner > the third check manner. After obtaining the running environment information, the check information, and the to-be-checked data, the vehicle control unit determines, based on the preset priority, the environment information, and the check information, whether the first check manner can be used. If the first check manner can be used, the vehicle control unit determines that the target check manner is the first check manner. If the first check manner cannot be used, the vehicle control unit determines whether the second check manner can be used. If the second check manner can be used, the vehicle control unit determines that the target check manner is the second check manner. If the second check manner cannot be used, the vehicle control unit determines that the target check manner is the third check manner.

In this application, the target check manner is determined based on the running environment information, the check information, and the preset priority, and priorities of various check manners are preset, so that a speed of determining the target check manner may be accelerated. In addition, a target check manner that better meets a user use requirement may be selected based on a user tendency, to meet various requirements of the user and improve user experience.

In this embodiment of this application, after the target check manner is determined, if it is determined that the target check manner is the third check manner, a corresponding table may be pre-calculated based on the check information, to facilitate subsequent check.

It may be understood that the table used for table lookup calculation may be pre-calculated and stored in a system in a development phase or a system initialization phase, and the stored table may be used for check in an actual check process, to accelerate a processing speed. For example, in the development phase, calculated results corresponding to various predetermined lengths are calculated for a common CRC algorithm, and are stored in the system. Alternatively, when the system is powered on and started, calculated results corresponding to various predetermined lengths are calculated for the common CRC algorithm, and are stored in the system. The pre-calculation does not occupy a running time, and the pre-calculated results are stored in a preset fixed storage path, to facilitate subsequent use, update, and maintenance.

It may be understood that for a special CRC algorithm, a corresponding table may be pre-calculated based on check information entered by the user, to facilitate subsequent check.

In this embodiment of this application, after the target check manner is determined, if it is determined that the target check manner is the first check manner, the feature value may be pre-calculated based on the check information, to facilitate subsequent check.

In this application, the feature value is a fixed value used in a subsequent vectorized calculation process. The feature value is determined based on a polynomial in the check information.

For example, the feature value is calculated based on whether input data is reversed in the check information. The following table 1 shows formulas for calculating feature values. (Only some information is shown in Table 1.)

**Table 1**

| Input data is reversed | | Input data is not reversed | |
|---|---|---|---|
| Parameter name | Formula/parameter meaning | Parameter name | Formula |
| P(x) | CRC polynomial | P(x)' | CRC polynomial bitwise reversal |
| K3 | x¹²⁸⁺⁶⁴ mod P(x) | K3' | (x¹²⁸⁺³² mod P(x) << 32)'<< 1 |
| K4 | x¹²⁸ mod P(x) | K4' | (x¹²⁸⁻³² mod P(x) << 32)'<< 1 |
| K5 | x⁹⁶ mod P(x) | K5' | (x⁶⁴ mod P(x) << 32)'<< 1 |
| K6 | x⁶⁴ mod P(x) | K6' | (x³² mod P(x) << 32)'<< 1 |
| U | floor(x⁶⁴/P(x)) | U' | (floor(x⁶⁴/P(x)))' |

As shown in Table 1, K3, K4, K5, K6, and U are feature values. P(x) is a polynomial with x as a variable, and an exponent of x in the formula is a right shift length of a data segment. That is, a right shift length of a data segment corresponding to K6 is 64, a right shift length of a data segment corresponding to K5 is 96, a right shift length of a data segment corresponding to K4 is 128, and a right shift length of a data segment corresponding to K3 is 128 + 64. mod indicates a modulo operation, << indicates a left shift, ' indicates the bitwise reversal, floor indicates the rounding, and / indicates a division operation. A formula corresponding to K3 when the input data is reversed is a modulo operation, and indicates a remainder of x¹²⁸⁺⁶⁴ divided by the polynomial P(x). A formula corresponding to K3' when the input data is not reversed indicates that a result of the modulo operation between x¹²⁸⁺³² and P(x) is left shifted by 32 bits, bitwise reversal is performed on left-shifted data, and data obtained after the bitwise reversal is performed is left shifted by one bit to obtain final data. U when the input data is reversed indicates that a result of x⁶⁴ divided by the polynomial P(x) is rounded.

It may be understood that the feature values used in the vectorized calculation may be pre-calculated and stored in the system in the development phase or the system initialization phase. In an actual check process, the feature values stored in the system may be used for check, to accelerate a processing speed. For example, in the development phase, a feature value corresponding to a common CRC algorithm is calculated and stored in the system. Alternatively, when the system is powered on and started, the feature value corresponding to the common CRC algorithm is calculated and stored in the system. The pre-calculation does not occupy a running time, and the pre-calculated results are stored in a preset fixed storage path, to facilitate subsequent use, update, and maintenance.

It may be understood that for a special CRC algorithm, a corresponding feature value may be pre-calculated based on the check information entered by the user, to facilitate subsequent check.

It may be understood that if the pre-calculated result completed in the development phase or the system initialization phase is not used for a long time, storage space is occupied. The vehicle control unit may clear the pre-calculated result based on an aging mechanism, and clear a pre-calculated result that is not frequently used or has low activity based on a use frequency and activity, to save space resources.

S703: The vehicle control unit checks the to-be-checked data based on the target check manner.

In this embodiment of this application, if the target check manner is the first check manner, a manner in which the vehicle control unit checks the to-be-checked data based on the target check manner includes: The vehicle control unit generates a target vector instruction set based on the vector instruction set supported by the current running environment, where the target vector instruction set is a vector instruction set capable of completing CRC calculation; and the vehicle control unit checks the to-be-checked data according to a target vector instruction and the check information.

It may be understood that a mathematical principle of vectorized calculation (the first check manner) in this application is same as a data principle of hardware CRC (the second check manner), but processing manners are different. The mathematical principle of the vectorized calculation is that one carry-less multiplication operation and one exclusive OR operation are equivalent to replacing a plurality of modulo-2 division operations of a same length. A processing manner of the first check manner is to perform vectorized calculation by combining a vector instruction set, and a processing manner of the second check manner is to complete CRC calculation according to a hardware CRC instruction. The hardware CRC instruction may be integrated into a hardware device.

The following describes a mathematical principle of the first check manner in detail. As shown in FIG. 9, complete to-be-checked data in FIG. 9 is M(x), and a vectorized calculation effect may be considered as selecting two pieces of adjacent fixed-length data from a header of the to-be-checked data. 64-bit H(x) and L(x) are used as an example herein. After carry-less multiplication is respectively performed on the two pieces of fixed-length data and corresponding feature values (namely, K₁ and K₂), obtained carry-less multiplication calculated results are separately right-shifted by a fixed length (namely, T+64 and T, where T is a length of remaining data G(x)). An exclusive OR operation is performed on right-shifted carry-less multiplication calculated results and remaining data (namely, G(x)) in the to-be-checked data. In this case, CRC calculation is completed for the data segments H(x) and L(x) in the header of the to-be-calculated data. The foregoing steps are repeatedly performed on an exclusive OR operation result until all the to-be-checked data is completely operated. The foregoing steps gradually reduce a length of the to-be-checked data until a quantity of remaining data blocks is reduced to twice a length of a CRC result. Then, the data blocks are processed by using one fast modulo operation (Barrett reduction), to obtain a final CRC result.

For example, a calculation process corresponding to FIG. 9 is as follows. $M \left(x\right) = D \left(x\right) ⋅ {x}^{T} ⊕ G \left(x\right)$ $M \left(x\right) mod P \left(x\right) = \left\{D\left(x\right)⋅\left[{x}^{T} mod P\left(x\right)\right]⊕G\left(x\right)\right\} mod P \left(x\right)$ $D \left(x\right) ⋅ \left[{x}^{T} mod P\left(x\right)\right] = \left\{H\left(x\right)⋅\left[{x}^{T + 64} mod P\left(x\right)\right]\right\} ⊕ \left\{L\left(x\right)⋅\left[{x}^{T} mod P\left(x\right)\right]\right\}$ 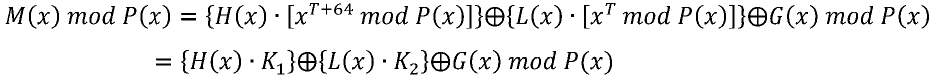 M(x) mod P(x) = {H(x) · [xT+64 mod P(x)]}⊕{L(x) · [xT mod P(x)]}⊕G(x) mod P(x) = {H(x) · K1}⊕{L(x) · K2}⊕G(x) mod P(x)

It can be understood that for the foregoing calculation process, refer to the conventional technology. Details are not described herein again.

It can be understood that in the first check manner, a carry-less multiplication operation and an exclusive OR operation are used to replace modulo-2 division, both the carry-less multiplication and the exclusive OR operation satisfy a law of commutation and a law of association, and there is no operation sequence dependency. In the foregoing manner, the problem of operation sequence dependency can be resolved from a principle, so that a parallel calculation capability of a CPU can be better used, a CRC calculation process can be accelerated based on the vector instruction set, and calculation efficiency and a calculation speed are improved.

In this embodiment of this application, a manner in which the vehicle control unit generates the target vector instruction set based on the vector instruction set supported by the current running environment includes: The vehicle control unit combines the vector instruction set supported by the current running environment, to obtain the target vector instruction set, where the target vector instruction set includes a carry-less multiplication operation instruction and an exclusive OR operation instruction.

It may be understood that, in actual application, CPUs of different system platforms may support different SIMD instruction sets and register sizes. As a result, vector instruction sets supported by the system platforms include different vector operation instruction sets. The carry-less multiplication operation and the exclusive OR operation need to be used in vectorized calculation in the first check manner. The exclusive OR operation is a basic vector operation, and all system platforms include the exclusive OR operation. The carry-less multiplication operation belongs to an advanced vector operation instruction. Some system platforms do not provide a carry-less multiplication operation instruction set. However, the carry-less multiplication operation instruction set may be obtained by combining basic instructions such as a vector shift, a vector multiplication, and vector loading, to implement the carry-less multiplication operation.

In this embodiment of this application, the vehicle control unit needs to combine the vector instruction set supported by the current running environment, to generate the target vector instruction set that includes a carry multiplication operation instruction and the exclusive OR operation instruction.

It may be understood that the target vector instruction set is an instruction set that can directly perform vectorized calculation, to implement data check. Vectorized CRC calculation cannot be implemented only based on a basic vector instruction set supported by the current running environment. Therefore, the basic vector instruction set supported by the current running environment needs to be converted and combined into the target vector instruction set that can perform CRC calculation.

In some embodiments of this application, the vector instruction set supported by the current running environment does not include the carry-less multiplication operation instruction. A manner in which the vehicle control unit combines the vector instruction set supported by the current running environment, to obtain the target vector instruction set includes: The vehicle control unit combines the vector instruction set supported by the current running environment, to obtain the carry-less multiplication operation instruction; and the vehicle control unit generates the target vector instruction set according to the carry-less multiplication operation instruction and the exclusive OR operation instruction in the vector instruction set supported by the current running environment.

In some examples, the vector instruction set supported by the current running environment does not provide the carry-less multiplication operation instruction. The vehicle control unit may implement the carry-less multiplication operation by performing secondary encapsulation on the vector instruction set. For example, for an ARM-SVE instruction set, basic instructions in the vector instruction set may be processed in manners like a vector shift, a vector multiplication, and vector loading, to obtain a carry-less multiplication operation instruction through combination and encapsulation.

For example, if the vector instruction set is ARM-NEON, vmull used to perform a multiplication operation on a signed or unsigned integer and vextq used to perform an extension, shift, and splicing operation on vector data in the instruction set are combined to obtain a carry-less multiplication operation instruction, and veor used to perform a vector exclusive OR operation in the instruction set is determined as an exclusive OR operation instruction. If the vector instruction set is ARM-SVE, svmul used to perform a vector multiplication operation, sveor used to perform a vector exclusive OR operation, and svlsr used to perform a vector logical right shift operation in the instruction set are combined to obtain a carry-less multiplication operation instruction, and sveor is determined as an exclusive OR operation instruction. If the vector instruction set is ARM-SVE2, svpmull used to perform an unsigned integer vector multiplication operation in the instruction set is determined as a carry-less multiplication operation instruction, and sveor is determined as an exclusive OR operation instruction. If the vector instruction set is INTEL-CLMUL, pclmulqdq used to perform a polynomial multiplication operation in the instruction set is determined as a carry-less multiplication operation instruction, and pxor used to perform a bitwise exclusive OR operation in the instruction set is determined as an exclusive OR operation instruction.

It can be understood that an advanced vector operation instruction required for the CRC calculation, namely, the carry-less multiplication operation instruction, is obtained by encapsulating the vector instruction set twice, to facilitate subsequent vectorized CRC calculation. This improves calculation efficiency and performance, and improves code reusability and portability.

In some other embodiments of this application, the vector instruction set supported by the current running environment includes the carry-less multiplication operation instruction, but a length that is of data capable of being processed by a vector register and that is indicated by the carry-less multiplication operation instruction is less than a polynomial length in the check information. A manner in which the vehicle control unit checks the to-be-checked data according to the target vector instruction and the check information includes: The vehicle control unit performs segmented processing according to the target vector instruction and the check information, to check the to-be-checked data.

In some examples, the carry-less multiplication operation instruction provided by the vector instruction set supported by the current running environment has a register processing length limit, and the vehicle control unit completes secondary encapsulation in a segmented operation manner.

It can be understood that the lengths of the feature values that participate in the carry-less multiplication operation in Table 1 are the same as the polynomial length. However, some vector instruction sets, for example, a carry-less multiplication instruction provided by an ARM-NEON instruction set, are implemented based on a vector register with a fixed length of 64 bits, and can process only a carry-less multiplication operation with a length of 64 bits each time. When the polynomial length in the CRC algorithm exceeds the length of the data capable of being processed by the vector register, a plurality of vector registers are introduced, and each of the feature values is divided into a plurality of segments based on the length that is of the data capable of being processed by the vector register and that is indicated by the carry-less multiplication operation instruction, where a length of each segment does not exceed the vector register length indicated by the carry-less multiplication operation instruction. Then, each segment of the feature value is loaded into different vector registers by using a vector loading instruction. The to-be-checked data is also divided into a plurality of segments, where a length of each segment is the same as the feature value length. Each segment of the to-be-checked data and a corresponding feature value are multiplied by using the carry-less multiplication operation instruction, and carry-less multiplication results of the segments are combined (through segment-by-segment shift and exclusive OR operations), to obtain a carry-less multiplication result of the to-be-checked data.

It may be understood that, in the foregoing manner of segment-based processing, a vector register with a fixed length can process a longer CRC polynomial.

It may be understood that, based on the foregoing manner, an operation framework corresponding to vectorized calculation is formed. As long as the vector instruction set supported by the current running environment is used, a corresponding target vector instruction may be obtained based on the operation framework, to perform vectorized CRC calculation of any CRC algorithm. The operation framework corresponding to the foregoing processing manner may be applicable to different vector instruction sets and different CRC algorithms. In an operation process, the user only needs to provide parameters such as an initial value of the CRC algorithm, whether an output is reversed, and a result exclusive OR value. The vehicle control unit pre-calculates a feature value based on a polynomial in the check information, and then inputs the parameters provided by the user into the operation framework, to obtain a calculated result of a CRC algorithm selected by the user.

In this application, during vectorized operation, the vector instruction set can meet requirements of different CRC algorithms based on the operation framework, and can be efficiently calculated in the current running environment. In addition, the operation framework has strong universality. The operation framework can be applied as long as a platform or a device can support a basic vector instruction set, and therefore, has high applicability.

In this embodiment of this application, the check information includes a polynomial length, and the first check manner includes a preset polynomial length. The vehicle control unit may further normalize the polynomial length in the check information based on the preset polynomial length. A processed polynomial length is the same as the preset polynomial length.

It may be understood that there are various types of CRC algorithms, and lengths of CRC polynomials are also different. To improve universality and consistency of the operation framework, polynomials of different lengths are normalized, so that a polynomial length obtained after normalization is the same as the preset polynomial length. For example, normalization processing is performed in a zero padding manner.

It should be understood that normalized polynomials have a same length, and different CRC algorithms may be calculated by using a same operation framework. This improves universality of the operation framework.

It may be understood that a CRC algorithm in which input data is reversed and a CRC algorithm in which input data is not reversed are different in terms of a vector shift direction, a vector loading range, a fast modulo operation, and the like. Therefore, a calculation framework needs to be correspondingly designed based on specific processing of input data of each CRC algorithm, to meet requirements of different CRC algorithms.

In this embodiment of this application, the check information further includes whether input data is reversed, the first check manner further includes a first preset processing framework and a second preset processing framework, the first preset processing framework is a preset CRC calculation framework used when the input data is reversed, and the second preset processing framework is a preset CRC calculation framework used when the input data is not reversed. In this embodiment of this application, a manner in which the vehicle control unit checks the to-be-checked data according to the target vector instruction and the check information includes: If the check information includes that the input data is reversed, the vehicle control unit checks the to-be-checked data according to the target vector instruction and the first preset processing framework; or if the check information includes that the input data is not reversed, the vehicle control unit checks the to-be-checked data according to the target vector instruction and the second preset processing framework.

It should be understood that a corresponding processing framework is set for a differentiated operation manner, to better adapt to different CRC algorithm requirements, improve calculation efficiency, and ensure universality and consistency of the operation framework.

It should be understood that the foregoing example is a specific implementation process of the first check manner. CRC calculation is completed based on operation framework vectorization. The operation framework is applicable to different CRC algorithms and different vector instruction sets, and a CRC operation speed is significantly increased.

In this embodiment of this application, if the target check manner is the second check manner, that the vehicle control unit checks the to-be-checked data based on the target check manner includes: The vehicle control unit checks the to-be-checked data based on hardware CRC indicated by hardware CRC information.

In some examples, determining that the target check manner is the second check manner indicates that a hardware calculation interface of a CRC algorithm that is selected by a user is provided in a current system, and the interface may be directly invoked to perform CRC calculation.

It may be understood that an input parameter of the hardware CRC interface is usually a basic data type (for example, an integer type). If the input parameter is long, the long to-be-checked data needs to be split into a plurality of parts based on a parameter type definition of the hardware CRC interface, and the hardware interface is invoked in sequence for calculation, to obtain a final CRC calculated result.

In this application, if the target check manner is the second check manner, high-speed CRC calculation may be performed based on hardware CRC, to fully use a calculation capability of hardware, and improve calculation efficiency and performance.

In this embodiment of this application, if the target check manner is the third check manner, that the vehicle control unit checks the to-be-checked data based on the target check manner includes: The vehicle control unit generates a table lookup table based on a preset bit and check information, and checks the to-be-checked data based on the table lookup table.

In some examples, determining that the target check manner is the third check manner indicates that neither hardware CRC nor vectorized calculation is used in the current system, and data check may be completed by using a table lookup method.

In this application, the table lookup method has high efficiency and flexibility, and is applicable to a calculation requirement of different CRC polynomial lengths.

In this application, in the foregoing manner, a plurality of CRC algorithms are supported, and an optimal and most efficient CRC check manner supported by a system in a current scenario is adaptively selected based on the current running environment and the CRC algorithm selected by the user. Efficient calculation is performed based on the CRC check manner. The data check method provided in this application expands application scenarios, supports different running environments and different CRC algorithms, and adaptively provides an optimal check manner based on system information, so as to improve a calculation speed, and optimize data check.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

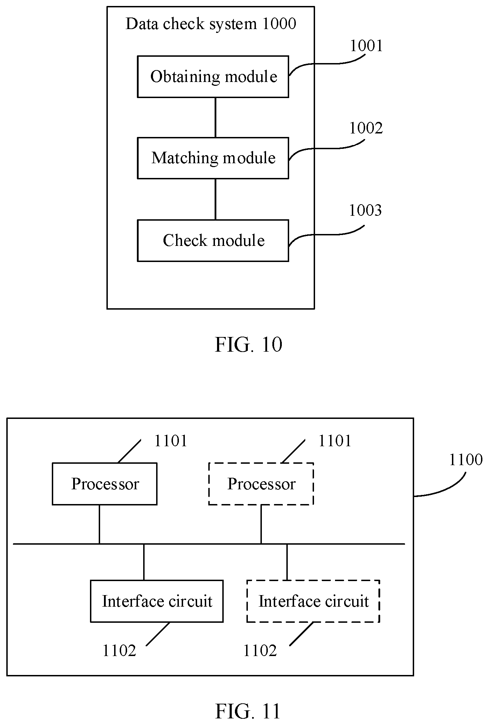

FIG. 10 is a diagram of an architecture of another data check system according to an embodiment of this application. The data check system 1000 includes an obtaining module 1001, a matching module 1002, and a check module 1003.

The obtaining module is configured to obtain running environment information, check information, and to-be-checked data.

The matching module is configured to match a target check manner based on the running environment information and the check information, where the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup.

The check module is configured to check the to-be-checked data based on the target check manner.

It should be understood that the foregoing descriptions of the data check system 1000 are merely examples for description. A specific form and an implementation of the data check system are not specifically limited in embodiments of this application.

An embodiment of this application further provides a chip system. As shown in FIG. 11, the chip system 1100 includes at least one processor 1101 and at least one interface circuit 1102. In an example, when the chip system 1100 includes one processor and one interface circuit, the processor may be a processor 1101 shown in a solid line box (or a processor 1101 shown in a dashed line box) in FIG. 11, and the interface circuit may be an interface circuit 1102 shown in a solid line box (or an interface circuit 1102 shown in a dashed box) in FIG. 11. When the chip system 1100 includes two processors and two interface circuits, the two processors include a processor 1101 shown in a solid line box and a processor 1101 shown in a dashed line box in FIG. 11, and the two interface circuits include an interface circuit 1102 shown in a solid line box and an interface circuit 1102 shown in a dashed line box in FIG. 11. This is not limited.

The processor 1101 and the interface circuit 1102 may be interconnected through a line. For example, the interface circuit 1102 may be configured to receive a signal. For another example, the interface circuit 1102 may be configured to send a signal to the another apparatus (for example, the processor 1101). For example, the interface circuit 1102 may read instructions stored in a memory, and send the instructions to the processor 1101. When the instructions are executed by the processor 1101, the firewall apparatus is enabled to perform the steps in the foregoing embodiment. Certainly, the chip system may further include another discrete component. This is not specifically limited in this embodiment of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the methods disclosed with reference to embodiments of this application may be directly performed and completed by a hardware processor, or may be performed and completed by using a combination of hardware in the processor and a software module.

An embodiment of this application further provides a computer-readable storage medium that stores one or more computer programs. The one or more computer programs include instructions. When the instructions are executed by a computer, the computer is enabled to perform a corresponding procedure of the data check method in the foregoing embodiments.

In some embodiments, the disclosed method may be implemented as computer program instructions encoded in a machine-readable format on a computer-readable storage medium or encoded on another non-transitory medium or product.

An embodiment of this application further provides a computer program product. When the computer program product runs on a computer, the computer is enabled to perform the foregoing related steps, to implement the data check method in the foregoing embodiments.

The apparatus, the computer-readable storage medium, the computer program product, or the chip provided in embodiments of this application is configured to perform the corresponding method provided above. Therefore, for beneficial effect that can be achieved by the apparatus, the computer-readable storage medium, the computer program product, or the chip, refer to the beneficial effect of the corresponding method provided above. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data check method, wherein the method comprises:
obtaining running environment information, check information, and to-be-checked data;
matching a target check manner based on the running environment information and the check information, wherein the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup; and
checking the to-be-checked data based on the target check manner.

2. The method according to claim 1, wherein the running environment information comprises a vector instruction set supported by a current running environment and/or hardware CRC information, and the check information comprises a to-be-used CRC algorithm parameter.

3. The method according to claim 2, wherein the target check manner is the first check manner, and the checking the to-be-checked data based on the target check manner comprises:
generating a target vector instruction set based on the vector instruction set supported by the current running environment, wherein the target vector instruction set is a vector instruction set capable of completing CRC calculation; and
checking the to-be-checked data according to the target vector instruction and the check information.

4. The method according to claim 3, the generating the target vector instruction set based on the vector instruction set supported by the current running environment comprises:
combining the vector instruction set supported by the current running environment, to obtain the target vector instruction set, wherein the target vector instruction set comprises a carry-less multiplication operation instruction and an exclusive OR operation instruction.

5. The method according to claim 4, the vector instruction set supported by the current running environment does not comprise the carry-less multiplication operation instruction; and the combining the vector instruction set supported by the current running environment, to obtain the target vector instruction set comprises:
performing a combination operation on the vector instruction set supported by the current running environment, to obtain the carry-less multiplication operation instruction; and
generating the target vector instruction set according to the carry-less multiplication operation instruction and the exclusive OR operation instruction in the vector instruction set supported by the current running environment.

6. The method according to claim 4, the vector instruction set supported by the current running environment comprises the carry-less multiplication operation instruction, but a length that is of data capable of being processed by a vector register and that is indicated by the carry-less multiplication operation instruction is less than a polynomial length in the check information; and
the checking the to-be-checked data according to the target vector instruction and the check information comprises:
performing segmentation processing according to the target vector instruction and the check information, and checking the to-be-checked data.

7. The method according to any one of claims 3 to 6, wherein the check information comprises the polynomial length, the first check manner comprises a preset polynomial length, and the method further comprises:
performing normalization processing on the polynomial length in the check information based on the preset polynomial length, wherein a processed polynomial length is the same as the preset polynomial length.

8. The method according to any one of claims 3 to 7, wherein the check information further comprises whether input data is reversed, the first check manner further comprises a first preset processing framework and a second preset processing framework, the first preset processing framework is a preset CRC calculation framework used when the input data is reversed, and the second preset processing framework is a preset CRC calculation framework used when the input data is not reversed; and
the checking the to-be-checked data according to the target vector instruction and the check information comprises:
if the check information comprises that the input data is checked, checking the to-be-checked data according to the target vector instruction and the first preset processing framework; or
if the check information comprises that the input data is not checked, checking the to-be-checked data according to the target vector instruction and the second preset processing framework.

9. The method according to claim 2, wherein the target check manner is the second check manner, and the checking the to-be-checked data based on the target check manner comprises:
checking the to-be-checked data based on hardware CRC indicated by the hardware CRC information.

10. The method according to claim 2, wherein the target check manner is the third check manner, and the checking the to-be-checked data based on the target check manner comprises:
generating a table lookup table based on a preset bit and the check information, and checking the to-be-checked data based on the table lookup table.

11. The method according to any one of claims 2 to 10, wherein the matching the target check manner based on the running environment information and the check information comprises:
determining whether the running environment information comprises the hardware CRC information; and
if it is determined that the running environment information comprises the hardware CRC information, and the hardware CRC information corresponds to the to-be-used CRC algorithm parameter, determining that the target check manner is the second check manner.

12. The method according to claim 11, wherein if the running environment information does not comprise the hardware CRC information, or if the running environment information comprises the hardware CRC information but the hardware CRC information does not correspond to the to-be-used CRC algorithm parameter, the matching the target check manner based on the running environment information and the check information comprises:
determining whether the running environment information comprises the vector instruction set; and
if it is determined that the running environment information comprises the vector instruction set and a data length of the to-be-checked data meets a preset threshold, determining that the target check manner is the first check manner.

13. The method according to claim 12, wherein the running environment information does not comprise the vector instruction set; or the running environment information comprises the vector instruction set, but the data length of the to-be-checked data does not meet the preset threshold; and the matching the target check manner based on the running environment information and the check information comprises:
determining that the target check manner is a third check manner.

14. The method according to any one of claims 2 to 13, the matching the target check manner based on the running environment information and the check information comprises:
determining the matched target check manner based on the running environment information, the check information, and a preset priority, wherein the preset priority is a preset selection sequence of different check manners.

15. A data check system, comprising:
an obtaining module, configured to obtain running environment information, check information, and to-be-checked data;
a matching module, configured to match a target check manner based on the running environment information and the check information, wherein the target check manner is one of a first check manner, a second check manner, and a third check manner; in the first check manner, cyclic redundancy check CRC calculation is completed based on vectorized calculation, in the second check manner, CRC calculation is completed based on hardware CRC, and in the third check manner, CRC calculation is completed based on table lookup; and
a check module, configured to check the to-be-checked data based on the target check manner.

16. A data check apparatus, comprising a processor and a memory, wherein the memory is coupled to the processor, the memory is configured to store a computer-readable instruction, and when the processor reads the computer-readable instruction from the memory, the data check apparatus is enabled to perform the method according to any one of claims 1 to 14.

17. A vehicle, wherein the vehicle comprises the data check system according to claim 15 or the data check apparatus according to claim 16.

18. A chip system, comprising at least one processor and at least one interface circuit, wherein the at least one interface circuit is configured to perform a transceiver function, and the at least one processor is configured to perform the method according to any one of claims 1 to 14.

19. A computer-readable storage medium, wherein the computer-readable storage medium comprises a computer program, and when the computer program is run on a computer, the computer is enabled to perform the method according to any one of claims 1 to 14.
